Europäisches Patentamt
European Patent Office
Office européen des brevets

(11) Publication number: 0 013 839 A1

# EUROPEAN PATENT APPLICATION

(21) Application number: 79303077.6

(22) Date of filing: 31.12.79

(51) Int. Cl.³: C 08 K 5/00, C 08 L 27/06

(30) Priority: 02.01.79 US 72

(43) Date of publication of application: 06.08.80 Bulletin 80/16

(84) Designated Contracting States: AT BE CH DE FR GB IT NL SE

(71) Applicant: M & T CHEMICALS, INC., Woodbridge, New Jersey 07095 (US)

(72) Inventor: Dworkin, Robert Dally, 19 Gramercy Road, Old Bridge New Jersey 08857 (US)

(74) Representative: Ellis, John Clifford Holgate et al, MEWBURN ELLIS & CO. 70-72 Chancery Lane, London WC2A 1AD (GB)

(54) **Improvements in or relating to heat stabilizer compositions and to halogen-containing polymers or resins containing the heat stabilizer compositions.**

(57) The combination of one or more conventional antimony - or bismuth-containing heat stabilizers with certain aromatic esters or aryloxides containing boron, phosphorus, silicon, antimony, tin or zinc interacts synergistically to provide an unexpectedly high level of heat stability to halogen-containing polymers or resins such as polyvinyl chloride (PVC). In addition the aromatic ester or aryloxide inhibits spontaneous degradation of the stabilizing component in the presence of heat and/or light.

0013839



"Improvements in or relating to heat stabilizer co… and to halogen-containing polymers or resins contai… heat stabilizer compositions".

This invention relates to a heat stabilizer composition comprising a component (I) containing a compound of antimony or bismuth and which is capable of imparting heat stability to halogen-containing polymers or resins of ethylenically unsaturated compounds, for example vinyl chloride and vinylidene chloride, and a component (II) which exhibits a synergistic effect on component (I), and to a halogen-containing polymer or resin containing the said heat stabilizer composition.

The efficacy of certain compounds of antimony and bismuth as heat stabilizers for halogen-containing polymers or resins such as polyvinyl chloride is well known. For example, United States Patent Specification Nos. 2,680,726; 2,684,956; 3,399,220; 3,466,261; 3,493,536; 2,161,024; 2,461,531; 2,556,420; 2,556,208; 2,801,988 and 3,530,158 disclose various sulphur- and non-sulphur-containing antimony compounds that are

useful for this purpose. While these antimony compounds do impart considerable heat stability to halogen-containing polymers or resins they have a number of disadvantages, two of the more serious ones being the tendency of many antimony compounds to exude from the polymer or resin composition and the inherent instability of some sulphur-containing antimony compounds upon exposure to heat or light for relatively short periods of time.

In addition, antimony compounds are often more costly than other conventional heat stabilizers and do not possess any advantages in performance to balance their shortcomings. These disadvantages have delayed the commercial acceptance of antimony compounds as heat stabilizers for halogen-containing polymers or resins.

It has now been found that the long-term stability of certain antimony and bismuth compounds and the efficacy of these compounds as heat stabilizers for halogen-containing polymers or resins such as polyvinyl chloride can be synergistically improved by the presence of aryloxides or aromatic esters containing boron, phosphorus, silicon, antimony, tin or zinc, and this discovery has led to the present invention.

The present invention provides a heat stabilizer composition comprising a component (I) which is capable of imparting heat stability to halogen-containing polymers or resins of ethylenically unsaturated

BAD ORIGINAL

hydrocarbons and a component (II) which exhibits a synergistic effect on component (I), the component (I) comprising a compound having one of the general formulae $M(X)_3$; $M(X)_n(Y)_{(3-n)}$; RM=S and $(R)_nM(X)_{(3-n)}$, wherein M is antimony or bismuth, R is optionally substituted hydrocarbyl as hereinbefore defined, n is 1 or 2 and X and Y individually represent the residue obtained by removing (i) the hydrogen atom from a carboxy (-COOH) group of a mono- or polyfunctional carboxylic acid or mercaptocarboxylic acid or by removing (ii) the hydrogen atom from the sulphur atom of a mercaptan, mercaptoalkanol, mercaptocarboxylic acid or an ester of a mercaptocarboxylic acid or mercaptoalkanol or by removing (iii) the hydrogen from a hydroxyl group of an alcohol or phenol, and the component (II) comprising a compound containing at least one residue obtained by removing one or both hydrogen atoms from the hydroxyl groups of an ortho-dihydric phenol, the said residue being bonded through one or both oxygen atoms to an element chosen from boron, phosphorus, silicon, antimony, tin and zinc. R may for instance be alkyl containing 1 to 20 carbon atoms.

The present invention also provides a halogen-containing polymer or resin, e.g. a vinyl chloride or other halide or a vinylidene halide or other halide polymer or resin, containing the heat stabilizer composition of this invention. Preferably the amount

of component (I) is from 0.05 to 5 parts by weight per 100 parts of polymer or resin and the relative weight of component (II) is from 1 to 20 percent by weight of component (I).

The aromatic ester or aryloxide compound (component (II)) disclosed herein effectively retards decomposition of the inherently unstable antimony- or bismuth-containing heat stabilizer (component (I)) in the presence of moisture, heat and/or light in addition to synergistically improving the performance of the heat stabilizer (component (I)).

The heat stabilizing component (I) of the present compositions may be represented by a compound having one of the three foregoing generic formula. Preferably this component (I) is represented by a compound having one of the following seven general formulae, which indicate in greater detail the various hydrocarbyl or substituted hydrocarbyl, sulphur- and oxygen-containing groups that may be bonded to the antimony or bismuth atom.

(t) $M(SR)_3$

(u) $M(SR^1COOR^2)_3$

(v) $M(SR^3OZ)_3$

(w) $(R'')_nMX_{(3-n)}$

(x) $M\left(A\overset{\overset{A}{\Uparrow}}{C}R^4\right)_3$

(y) 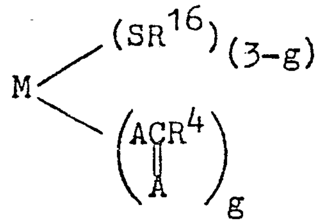

(z) $R^{11}M=S$.

In the foregoing general formulae (t) - (z) M as above represents either antimony or bismuth, antimony compounds being preferred, and X, R and n are as hereinbefore defined. For compound (t) R is preferably hydrocarbyl containing 1-20 carbon atoms or hydroxyalkyl containing 1-20 carbon atoms, A is oxygen or sulphur. As used in this specification the term "hydrocarbyl" includes alkyl, cycloalkyl, aryl, alkaryl or aralkyl. The alkyl portion of any hydrocarbyl group preferably contains from 1 to 20 carbon atoms. The hydrocarbyl group may contain one or more substituents, for example hydroxyl. In this instance the group "-SR" in the foregoing formula (t) could represent the residue of a mercapto-alcohol remaining following removal of hydrogen from the mercapto (-SH) group, and R could be represented by

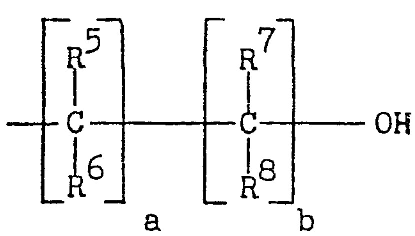 ,

wherein $R_5$, $R_6$, $R_7$, $R_8$, a and b are defined hereinafter.

Compounds corresponding to the general formula $M(SR)_3$ may be prepared by reacting a mercaptan or

0013839

mercaptoalcohol represented by the general formula HSR with an antimony or bismuth trihalide in the presence of an acid acceptor or with antimony or bismuth oxide. It has been previously disclosed that the residue remaining following removal of the mercapto (-SH) group of suitable mercaptoalcohols exhibits the general formula

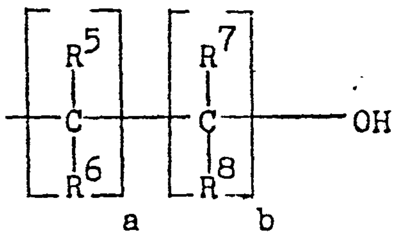

wherein $R^5$ and $R^7$ are chosen from hydrogen, hydroxyl, halogen, -SH, -OAlK, -OAr or AlK wherein AlK is alkyl containing from 1 to 20, preferably from 1 to 8 carbon atoms. The groups represented by $R^6$ and $R^8$ are chosen from hydrogen and alkyl containing from 1 to 18, preferably 1 to 8 carbon atoms. The terms a and b each represent an integer from 1 to 20.

Compounds represented by the general formula (u), $M(SR^1COOR^2)_3$, are derivatives of mercaptocarboxylic acid esters. In this formula $R^1$ represents alkylene, arylene or aralkylene (e.g. xylyl) wherein any alkylene group or alkylene portion of an aralkylene group contains from 1 to 20 carbon atoms and $R^2$ represents substituted or unsubstituted alkyl, aryl or aralkyl (e.g. benzyl). Typically $R^1$ represents the hydrocarbyl portion of a mercaptoacetic, β-mercaptopropionic, thiomalic,

thiosalicylic or other mercaptocarboxylic acid containing from 2 to 21 carbon atoms, and $R^2$ represents the hydrocarbyl or hydroxyhydrocarbyl portion of the esterifying alcohol, which contains from 1 to 20 carbon atoms and typically can be methanol, n-propanol, isopropanol, n-butanol, the isomeric octanols and decanols, glycerol, ethylene glycol, phenoxyethanol, pentaerythritol or trimethylol propane. For instance for compounds (u) $R^1$ may be methylene or ethylene and $R^2$ may be alkyl containing from 1 to 20 carbon atoms; or $R^1$ may be methylene and $R^2$ may be

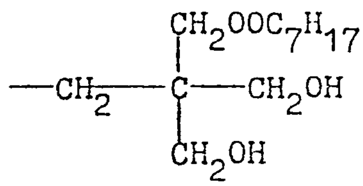 .

Readily available mercaptoacid esters that can be employed to prepare compounds corresponding to the foregoing formula (u) include methyl mercaptoacetate, amyl mercaptoacetate, isooctylmercaptoacetate, isodecylmercaptoacetate, dodecylmercaptoacetate, octadecylmercaptoacetate and in general the esters of mono and dibasic aliphatic and aromatic mercaptoacids, such as esters of beta-thiopropionic acid, thiolactic acid, thiobutyric acid and mercaptolauric acid.

In the foregoing general formula (v), which represents antimony or bismuth derivatives of mercaptoalkanol esters, $R^3$ exhibits the general formula

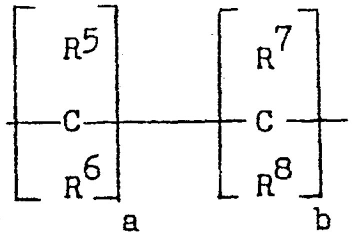

and Z (for compound (v)) represents the residue obtained by removing the hydroxyl portion of a carboxy group from a mono- or polycarboxylic acid, preferably from a mono- or dicarboxylic acid containing from 2 to 20 carbon atoms or a half ester of the said dicarboxylic acid. All of the "R" terms in this formula have been previously defined. For instance, with regard to compounds (v) $R^3$ may be ethylene and Z may be the residue obtained by removing the hydroxyl group from the carboxyl group of a monocarboxylic acid containing from 1 to 20 carbon atoms, or the residue obtained by removing the hydroxyl group from one carboxyl group of a dicarboxylic acid containing from 2 to 20 carbon atoms or from a half ester of the said dicarboxylic acid. The group $-SR^3OZ$ in general formula (v) can represent, for example, the residue obtained by removal of the hydrogen atom from the mercapto group of 2-mercaptoethyl caprylate, 2-mercaptoethyl isooctyl maleate, 3-mercaptopropyl butyl azelate or 1-thioglyceryl oleate.

Generic formula (w), $(R'')_nMX_{(3-n)}$, is representive of organoantimony or organobismuth derivatives of mercaptides, mercaptoalkanol esters, mercaptoacid esters, carboxylic acids, thiocarboxylic acids, alcohols and